# EUROPÄISCHE PATENTSCHRIFT

(11) **EP 2 258 606 B1**
(45) Veröffentlichungstag und Bekanntmachung des Hinweises auf die Patenterteilung: **27.03.2013**
(21) Anmeldenummer: 10005501.1
(22) Anmeldetag: 27.05.2010
(51) Int. Cl.: B62D 15/02

(54) **Verfahren zum Bestimmen einer Lenkkurve für Lenkeinschläge von lenkbaren Rädern eines Fahrzeugs und Parkassistenzsystem für ein Fahrzeug**
Method for determining a steering curve for steering angles of steerable wheels of a vehicle and park assistance system for a vehicle
Procédé de détermination d'une courbe caractéristique de braquage des roues directrices d'une voiture et dispositif d'assistance au parking

(30) Priorität: 05.06.2009 DE 102009024063
(43) Veröffentlichungstag der Anmeldung: 08.12.2010
(73) Patentinhaber: Valeo Schalter und Sensoren GmbH, 74321 Bietigheim-Bissingen (DE)
(72) Erfinder: Jecker, Nicolas, 73730 Esslingen (DE); Vovkushevsky, Vsevolod, 74321 Bietigheim-Bissingen (DE); Geiger, Tobias, 74321 Bietigheim-Bissingen (DE)

(56) Entgegenhaltungen:
- EP-A2- 1 491 430
- WO-A1-2004/050458
- DE-A1-102007 004 972
- DE-A1-102007 055 391

## Beschreibung

Die Erfindung betrifft ein Verfahren zum Bestimmen einer Lenkkurve für Lenkeinschläge von lenkbaren Rädern eines Fahrzeugs bei einem Parkvorgang des Fahrzeugs, bei welchem das Lenken der lenkbaren Räder durch einen autonomen Lenkeingriff in ein Lenksystem des Fahrzeugs durchgeführt wird und die Parkbahn mit Bahnsegmenten mit unterschiedlichen Krümmungen ausgebildet sind, wobei die Lenkkurve abhängig von der Parkbahn bestimmt wird. Des Weiteren betrifft die Erfindung ein Parkassistenzsystem für ein Fahrzeug, welches zum Bestimmen einer Lenkkurve für Lenkeinschläge von lenkbaren Rädern eines Fahrzeugs bei einem Parkvorgang ausgebildet ist.

Bei bekannten Parksystemen werden für Lenkkurven sehr aufwändig erzeugbare mathematische Kurven, wie Klothoiden, verwendet. Dafür ist jedoch eine entsprechend ausgebildete Recheneinheit erforderlich, welche teuer ist. Darüber hinaus sind Systeme bekannt, welche eine Parkbahn aus vorher abgelegten Bahnsegmenten zusammensetzen. Dies führt aber dazu, dass die Übergänge an den Bahnsegmenten Knicke etc. aufweisen. Das Lenken wird ausgehend von diesen Bahnen dann sehr ruppig durchgeführt, was weder nutzerfreundlich und komfortabel noch verschleißarm ist.

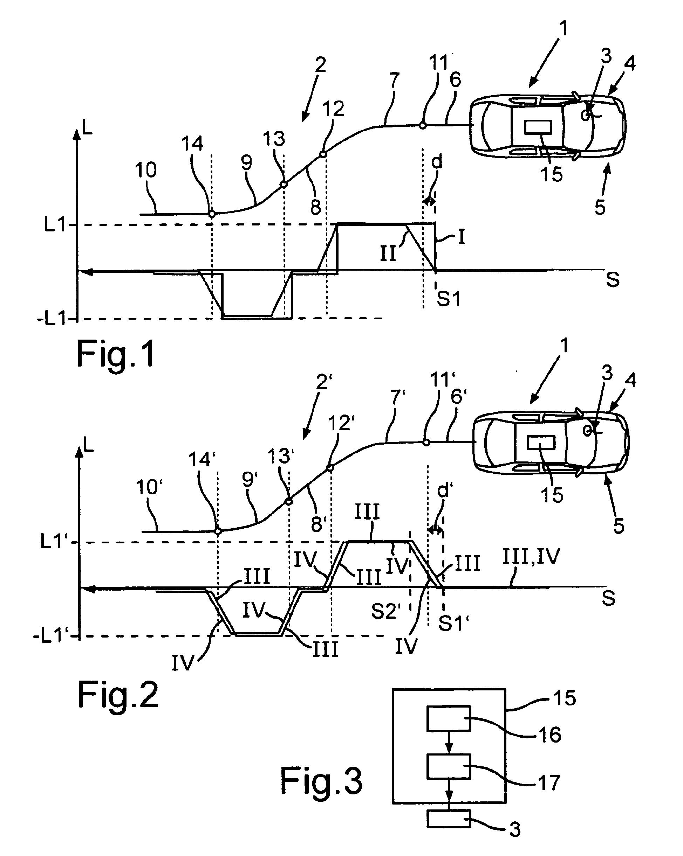

In Fig. 1 ist ein Diagramm gezeigt, in welchem Lenkkurven I und II aus dem Stand der Technik dargelegt sind. Die Lenkanforderungen L während eines Parkvorgangs sind abgebildet. Ein Fahrzeug 1, in Draufsicht gezeigt, führt einen rückwärtigen Einparkvorgang in eine nicht gezeigte Längsparklücke durch, wobei dazu eine Parkbahn 2 mit einem autonomen Lenkeingriff in ein Lenksystem 3 des Fahrzeugs 1 durchfahren wird und lenkbare Räder 4 und 5 entsprechend eingeschlagen werden. Die Parkbahn 2 ist aus mehreren Bahnsegmenten 6 bis 10 zusammengesetzt, wobei zwischen benachbarten Bahnsegmenten 6 bis 10 Übergänge 11 bis 14 ausgebildet sind. Eine interne Lenkkurve I wird abhängig von der Parkbahn 2 bestimmt. An den Übergängen 11 bis 14 sind mehr oder minder große Krümmungssprünge aufgrund der unterschiedlichen Krümmungen der angrenzenden Bahnsegmente 6 bis 10 vorhanden.
So tritt ein derartiger Krümmungssprung beispielsweise zwischen den Bahnsegmenten 6 und 7 auf. Das Bahnsegmente 7 weist über seine Länge eine konstante Krümmung auf. Im Stand der Technik wird somit zum Befahren des zweiten Bahnsegments 7 am Streckenabschnitt S1 eine Lenkanforderung erkannt, wodurch diesbezüglich ein diskreter Sprung von 0 auf die Lenkanforderung L1 durchgeführt wird. Es wird also quasi von Null sofort auf Volleinschlag gesprungen. Ein Versatz d zwischen dem Streckenpunkt S1 und der Position des Übergangs 11 entlang der Strecke S ist darin begründet, dass aufgrund der Bewegung des Fahrzeugs 1 beim rückwärtigen Einparken und der Trägheit der Systeme diesbezüglich ein gewisser Vorlauf im Hinblick auf die Lenkanforderung berücksichtigt werden muss, dass am Übergang 11 dann tatsächlich auch der Einschlag der Räder beginnt. Entsprechendes wird dann an den Übergängen 12, 13 und 14 vollzogen, wobei die interne Lenkkurve I jeweils in diskreten Sprüngen zwischen einer Lenkanforderung 0 und einer Lenkanforderung L1 bzw. -L1 spring. Dadurch entstehen sehr ruppige Lenkvorgange. In Fig. 1 ist darüber hinaus eine externe Lenkkurve II gezeigt, welche dann an das Lenksystem 3 übergeben wird, wobei dazu für die externe Lenkkurve II die interne Lenkkurve I berücksichtigt wird. Die resultierenden ruppigen Lenkvorgänge sind daher auch unmittelbar am Lenksystem 3 vorhanden.

Aus der WO2004/050458 A1 ist bereits ein gattungsgemäßes Verfahren zum Bestimmen einer Lenkkurve eines Fahrzeugs bei einem Parkvorgang bekannt, wobei das Fahrzeug durch einen autonomen Lenkeingriff in ein Lenksystem entlang einer Parkbahn in eine Parkposition geführt werden soll. Dabei wird eine Parkbahn ermittelt, die insgesamt fünf Kurvenabschnitte umfasst, wobei der erste Kurvenabschnitt durch eine Gerade und der dritte und fünfte Kurvenabschnitt jeweils durch einen Kreisbogenabschnitt gebildet sind. Diese Kurvenabschnitte weisen jeweils unterschiedliche Krümmungswerte auf. Um einen knickfreien Übergang zwischen den Kurvenabschnitten zu ermöglichen, ist zwischen diesen Kurvenabschnitten als zweiter und als vierter Kurvenabschnitt jeweils ein Klothoidenabschnitt vorgesehen. Diese Klothoidenabschnitte lassen sich an beiden Enden an die Krümmung des angrenzenden Kurvenabschnitts angepassen und bilden somit einen Übergang zwischen den Kreis- bzw. Geradenabschnitten.

Des Weiteren wird in der EP 1 491 430 A2 ein Verfahren zum Bestimmen einer Lenkkurve eines Fahrzeugs bei einem Parkvorgang beschrieben, bei welchen der knickfreie Übergang zwischen Bahnsegmenten mit unterschiedlicher Krümmung ebenfalls durch Klothoidenabschnitte erreicht wird.

Es ist Aufgabe der vorliegendem Erfindung, ein Verfahren und ein Parkassistenzsystem zu schaffen, mit welchem bzw. bei welchem Lenkbewegungen während eines Einparkvorgangs im Hinblick auf ihre Ruppigkeit zumindest reduziert werden und dazu eine kostengünstige Bestimmung einer Lenkkurve ermöglicht wird.

Diese Aufgabe wird durch ein Verfahren, welches die Merkmale nach Anspruch 1 aufweist, und ein Parkassistenzsystem, welches die Merkmale nach Anspruch 11 aufweist, gelöst.

Bei einem erfindungsgemäßen Verfahren zum Bestimmen zumindest einer Lenkkurve für Lenkeinschläge von lenkbaren Rädern eines Fahrzeugs bei einem Parkvorgang des Fahrzeugs wird das Lenken der lenkbaren Räder durch einen autonomen Lenkeingriff in ein Lenksystem des Fahrzeugs durchgeführt. Eine Parkbahn für das Fahrzeug wird aus Bahnsegmenten mit unterschiedlichen Krümmungen ausgebindet, wobei die Lenkkurve abhängig von der Parkbahn bestimmt wird. Bei einem Auftreten eines Krümmutigssprungs an einem Übergang zwischen zwei Bahnsegmenten mit unterschiedlichen Krümmungen wird der Verlauf der Lenkkurve am Übergang abhängig von den Krümmungen der Parkbahn bestimmt. Es werden also explizit die Krümmungen mit ihren Werten für die Bestimmung der Lenkkurve herangezogen und abhängig davon dann der Verlauf der Lenkkurve spezifisch an dem Bahnsegmentübergang bestimmt. Anders als in dem erläuterten Stand der Technik, bei dem die Krümmungen diesbezüglich nicht berücksichtigt werden, sondern lediglich festgestellt wird, dass ein Krümmungssprung da ist, wie groß sich derjenige noch bemisst, bleibt dort für die Bestimmung der Lenkkurve unberücksichtigt. Bei dem erfindungsgemäßen Verfahren ergeben sich daher nicht mehr diskrete Kurvensprünge in der Lenkkurve, sondern es wird diesbezüglich eine deutlich harmonischere Lenkkurve erzeugt, welche innerhalb eines bestimmten Streckenintervalls ansteigt. Dadurch können ruppige Lenkvorgänge beim Einparkvorgang oder beim Ausparkvorgang vermieden werden.

Bei der Bestimmung der Parkbahn werden die konkreten Krümmungswerte der Bahnsegmente erfasst bzw. sind bekannt und werden abgespeichert. Diese werden dann bei der Lenkkurvenbestimmung herangezogen. Insbesondere sind bereits vorgegebene Bahnsegmente mit konkreten Krümmungswerten im System abgelegt und die Parkbahn wird abhängig von den Umgebungsbedingungen und der Parklücke aus vorhandenen Bahnsegmenten zusammengesetzt.

Besonders vorteilhaft ist es, wenn bei einem Auftreten eines Krümmungssprungs an einem Übergang zwischen zwei Bahnsegmenten mit unterschiedlichen Krümmungen der Verlauf der Lenkkurve auch abhängig von der Strecke bestimmt wird. insbesondere abhängig von der Position des Fahrzeugs auf der Parkbahn bestimmt wird. Es wird also in bevorzugter Weise neben den expliziten Werten der Krümmungen am Übergang auch die gegenwärtige Position des Fahrzeugs entlang der Parkbahn herangezogen und für diese Lenkkurvenbestimmung berücksichtigt. Zusätzlich oder anstatt dazu kann als vorteilhafte streckenabhängige Bestimmung auch vorgesehen sein, dass bei einem Auftreten eines Krümmungssprungs an einem Übergang zwischen zwei Bahnsegmenten mit unterschiedlichen Krümmungen der Verlauf der Lenkkurve abhängig von der Position des Krümmungssprungs auf der Parkbahn bestimmt wird. Auch dies trägt zusätzlich zur deutlichen Verbesserung der Lenkkurvenveriaufsgestaltung bei, so dass besonders einfach und aufwandsarm eine Lenkkurve generiert werden kann, die ruppigen Lenkvorgängen entgegenwirkt und insbesondere diese vermeidet.

Erfindungsgemäß wird bei einer Abweichung der Werte der Krümmungen von zwei aneinander angrenzenden Bahnsegmente um zumindest einen vorgebbaren Toleranzwert der Verlauf der Lenkkurve am Segmentübergang geglättet. Dabei wird bei einer Abweichung der Werte der Krümmungen zumindest um einen vorgebbaren Toleranzwert der Verlauf der Parkbahn am Segmentübergang geglättet und abhängig von dieser Parkbahnglättung die Lenkkurve bestimmt, insbesondere geglättet. Dies ist eine besonders vorteilhafte Vorgehensweise, da durch diese Glättung eine quasi stetig differenzierbare Bahnkurve erzeugt werden kann, so dass in diesem Zusammenhang ruppige Lenkbewegungen und unkomfortable und gegebenenfalls für Räder und Lenksystemkomponenten verschleißträchtige Lenkbewegungen vermieden werden können.

Erfindungsgemäß wird das Glätten durch eine Interpolation zwischen den jeweiligen die Krümmungswerte definierenden Punkten der jeweiligen Bahnsegmente am Bahnsegmentübergang durchgeführt. Da insbesondere eine effektive Krümmung am Segmentübergang eine Funktion der einzelnen Krümmungen der aneinander angrenzenden Bahnsegmente ist und darüber hinaus auch eine Funktion der Strecke ist, kann der Lenkeinschlag aus einer Funktion bestimmt werden, welche ebenfalls von diesen Parametern abhängig ist. Die Funktionsabhängigkeit von der Strecke ist insbesondere wiederum eine Abhängigkeit von der Position des Fahrzeugs auf der Parkbahn und/oder abhängig von der Position des Krümmungssprungs auf der Parkbahn. Gerade diese hier in vorteilhafter Ausführung der Erfindung zugrunde gelegte

Funktionszusammenhängigkeit und Abhängigkeit von den Parametern ermöglicht in besonders einfacher und aufwandsarmer Rechenweise eine sehr effektive Glättung des Kurvenverlaufs am Segmentübergang.

Das erfindungsgemäße Verfahren ermöglicht insbesondere ein assistiertes Parken, bei dem der Lenkvorgang von der Strecke und somit von Positionen entlang der Parkbahn abhängig ist. Erfindungsgemäß wird somit bei einem Krummungssprung an einem Segmentubergang dieser durch eine streckenabhängige lineare Interpolation, welche höherer Ordnung sein kann, geglättet, so dass eine quasi stetige differenzierbare Lenkkurve erzeugt wird.

Vorzugweise wird das Interpolieren abhängig von dem Verlauf der vorläufig bestimmten Parkbahn, insbesondere zumindest von Teilabschnitten davon, durchgeführt.

Insbesondere wird die Lenkkurve so berechnet, dass eine aufgrund der Parkbahn erforderliche Änderung eines Lenkeinschlags, insbesondere aufgrund eines Krümmungssprungs, an einem Übergang zwischen zwei Bahnsegmenten innerhalb eines Wegintervalls von einem Ausgangswert auf einen erforderlichen Endwert verändert, insbesondere kontinuierlich verändert wird. Unerwünschte diskrete Sprünge in der Kurve können dadurch vermieden werden, so dass auch unerwünschte ruppige Lenkbewegungen vermieden werden können.

Vorzugsweise weist ein Bahnsegment über seine Länge einen konstanten Krümmungswert auf und dieser Krümmungswert wird zur Bestimmung eines Krümmungssprungs berücksichtigt.

Es kann jedoch auch vorgesehen sein, dass ein Bahnsegment über seine Länge einen variierenden Krümmungswert aufweist und für die Beurteilung eines Krümmungssprungs zwischen zwei Bahnsegmenten der Krümmungswert eines Bahnsegments berücksichtigt wird, welcher direkt am Krümmungssprung bzw. direkt an dem Segmentübergang auftritt.

Besonders vorteilhaft ist es, wenn die Lenkkurve als interne Lenkkurve des Parkassistenzsystems bestimmt wird und abhängig von dieser internen Lenkkurve eine an das Lenksystems des Fahrzeugs ausgegebene externe Lenkkurve bestimmt wird. Bei einer derartigen Ausgestaltung weist das Parkassistenzsystem vorzugsweise quasi zwei Module auf, wobei mit einem ersten Modul die interne Lenkkurve abhängig von der vorzugsweise auch mit diesem ersten Modul konstruierten Parkbahn bestimmt wird. Diese interne Lenkkurve wird dann als Information an ein dem ersten Modul nachgeschaltetes zweites Modul übertragen, wobei dieses zweite Modul abhängig von dieser internen Lenkkurve und gegebenenfalls von Sensoren des Fahrzeugs erfassten Informationen eine externe Lenkkurve, die dann an das Lenksystem ausgegeben wird, bestimmt. So können im zweiten Modul Informationen von Lenkwinkelsensoren, Gierratensensoren, Wegsensoren, Entfernungssensoren, etc. berücksichtigt werden. Diese zusätzlichen Informationen stellen somit insbesondere derartige dar, die die tatsächliche Ist-Situation des Fahrzeugs während des Parkvorgangs darstellen. Ergeben sich diesbezüglich beispielsweise Abweichungen von Soll-Vorgaben, so kann dies korrigierend berücksichtigt werden und die externe Lenkkurve geändert werden. Treten keine derartigen auf, so ist insbesondere der Verlauf der internen Lenkkurve und der externen Lenkkurve praktisch gleich. Allein dies ist bereits mit der Vorgehensweise aus dem Stand der Technik nicht möglich.

Vorzugsweise wird die interne Lenkkurve lediglich abhängig von der bestimmten Parkbahn gebildet und bleibt während des Parkvorgangs unverändert. Insbesondere werden situationsspezifische Änderungen oder Gegebenheiten während des Parkvorgangs, insbesondere die Ist-Position des Fahrzeugs auf der Parkbahn oder relativ zur Parkbahn und/oder die Geschwindigkeit des Fahrzeugs und/oder Umgebungsänderungen, wie Hindernisse oder dergleichen, zum Fahrzeug, bei der Bestimmung der externen Lenkkurve berücksichtigt. Diese kann somit auch während des Parkvorgangs abhängig von diesen Einflüssen geändert werden.

Mit dem Verfahren kann somit auch der Vorteil erreicht werden, dass die Lenkkurve sehr schnell berechenbar ist und durch einstellbare Parameter, wie beispielsweise einen maximalen Lenkgradienten, einer maximalen Lenkgeschwindigkeit und die Anzahl von Segmentierungsschritten der Parkbahn und somit der Segmentzahl der Parkbahn, eine harmonische Lenkbewegung erreicht werden kann.

Vorzugsweise ist vorgesehen, dass das Durchführen von autonomen Lenkeinschlägen verhindert oder gestoppt oder unterbrochen wird, wenn das Fahrzeug während des Parkvorgangs mit einer Geschwindigkeit kleiner eines Geschwindigkeitsschwellwerts bewegt wird, insbesondere zum Stehen kommt. Dies wird insbesondere bei einer Bestimmung der externen Lenkkurve berücksichtigt, so dass auch hier hohem Verschleiß, beispielsweise beim Weiterlenken im Stand des Fahrzeugs entgegengewirkt wird. Darüber hinaus können gerade durch diese Vorgehensweise Verfälschungen der weiteren Befahrung der Parkbahn verhindert werden, indem im Stand des Fahrzeugs ein weiteres Durchführen von Lenkeinschlägen vermieden wird.

Bevorzugt wird auch vorgesehen, dass eine Änderung der Geschwindigkeit des Fahrzeugs während des Parkvorgangs erfasst und abhängig davon eine von der bestimmten Lenkkurve, insbesondere einer bestimmten externen Lenkkurve, abhängige Lenkanforderung an das Lenksystem geändert wird. Dadurch können alle möglichen dynamischen Fahrzeugbewegungen berücksichtigt werden, so dass das System sehr robust gegen Abbremsungen oder Beschleunigungen während des Parkvorgangs ist.

Insbesondere werden für das Ausbilden der Parkbahn als Parameter eine Segmentierungsweise und somit auch Segmentierungsschritte vorgegeben. Für das Durchfahren der Parkbahn werden insbesondere auch für die Lenkkurve Parameter vorgegeben, die sich vorzugsweise in einem maximalen Lenkgradienten und/oder eine Lenkgeschwindigkeit darstellen.

Ein erfindungsgemäßes Parkassistenzsystem ist zum Bestimmen zumindest einer Lenkkurve für Lenkeinschläge von lenkbaren Rädern eines Fahrzeugs bei einem Parkvorgang des Fahrzeugs ausgebildet. Das Lenken der lenkbaren Räder des Fahrzeugs erfolgt durch einen autonomen Lenkeingriff in das Lenksystem des Fahrzeugs. Das Parkassistenzsystem umfasst eine Steuer- und Recheneinheit, mittels welcher eine Parkbahn aus Bahnsegmenten mit unterschiedlichen Krümmungswerten ausgebildet wird. Darüber hinaus umfasst das Parkassistenzsystem zumindest ein erstes Modul, mittels welchem die Lenkkurve, insbesondere eine interne Lenkkurve abhängig von der Parkbahn bestimmt, insbesondere berechnet wird. Das erste Modul ist derart ausgebildet, dass bei einem Auftreten des Krümmungssprungs an einem Übergang zwischen zwei Bahnsegmenten mit unterschiedlichen Krümmungswerten der Verlauf der Lenkkurve am Übergang abhängig von den Krümmungswerten der Parkbahn bestimmt wird.

Erfindungsgemäß ist das erste Modul auch dahingehend konzipiert, dass eine Abweichung der Werte der Krümmungen um zumindest einen vorgebbaren Toleranzwert der Verlauf der Lenkkurve geglättet wird, insbesondere die Bahn am Segmentübergang geglättet wird und abhängig davon die Lenkkurve bestimmt wird, insbesondere das Glätten durch eine Streckenabhänge lineare Interpolation zwischen den jeweiligen Krümmungswerte definierenden Punkten der jeweiligen Bahnsegmente durchgeführt wird.

Insbesondere ist das erste Modul derart ausgebildet, dass bei einem Auftreten eines Krümmungssprungs an einem Übergang zwischen zwei Bahnsegmenten an unterschiedlichen Krümmungen der Verlauf der Lenkkurve abhängig von der Position des Fahrzeugs auf der Parkbahn und/oder abhängig von der Position des Krümmungssprungs auf der Parkbahn bestimmt wird.

Vorzugweise weist das Parkassistenzsystem ein zweites Modul auf, welches mit dem ersten Modul verbunden ist und welches zweite Modul abhängig von der im ersten Modul ermittelten internen Lenkkurve eine an das Lenksystem ausgegebene externe Lenkkurve bestimmt.

Vorteilhafte Ausführungen des erfindungsgemäßen Verfahrens sind als vorteilhafte Ausführungen des erfindungsgemäßen Parkassistenzsystems anzusehen.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in den jeweils angegebenen Kombination, sondern auch in anderen Kombinationen oder in Alleinstellung verwendbar, ohne den Rahmen der Erfindung zu verlassen.

Ein Ausführungsbeispiel der Erfindung wird nachfolgend anhand schematischer Zeichnungen näher erläutert. Es zeigen:
- Fig. 1: ein Diagramm, bei dem eine Lenkanforderung beim Durchfahren einer Parkbahn durch ein Fahrzeug gemäß einer Lenkkurve aus dem Stand der Technik gezeigt ist;
- Fig. 2: ein Diagramm, bei dem die Lenkanforderung abhängig von der Strecke gemäß einem Ausführungsbeispiel der Erfindung dargestellt ist; und
- Fig. 3: ein schematisches Blockbild mit Komponenten eines erfindungsgemäßen Parkassistenzsystems.

In den Figuren werden gleiche oder funktionsgleiche Elemente mit den gleichen Bezugszeichen versehen.

In der Darstellung gemäß Fig. 2 ist eine Lenkanforderung L und somit während eines Befahrens der Parkbahn 2' erforderliche Lenkeinschläge von lenkbaren Rädern 4 und 5 eines Fahrzeugs 1 in Abhängigkeit von der Strecke S dargestellt. Die Parkbahn 2' setzt sich aus mehreren Bahnsegmenten 6', 7'; 8', 9' und 10' zusammen. Zwischen den einzelnen Bahnsegmenten 6' bis 10' sind Übergänge 11', 12', 13' und 14' vorhanden. Im Ausführungsbeispiel ist vorgesehen, dass die Bahnsegmente 6' bis 10' jeweils über ihre gesamte Länge gesehen eine konstante Krümmung aufweisen, wobei die Bahnsegmente 6' und 10' Geraden sind und somit deren Krümmung 0 ist. Entsprechendes gilt auch für das Bahnsegment 8'. Ausgehend von der in Fig. 2 gezeigten Startposition des Fahrzeugs 1 vollzieht dieses einen rückwärtigen einzügigen Einparkvorgang in eine Längsparklücke, wobei dazu entlang der Parkbahn 2' mittels des Parkassistenzsystems 15 ein autonomer Lenkeingriff in ein Lenksystem 3 durchgeführt wird und dadurch die lenkbaren Räder 4 und 5 des Fahrzeugs 1 entsprechend eingeschlagen werden.

Bei einem semi-autonomen Parkvorgang ist es dem Fahrer zugeteilt, dass er Gas gibt und bremst. Ein Lenken und somit ein Einschlagen der lenkbaren Räder des Fahrzeugs wird automatisch und somit fahrerunabhängig durchgeführt oder das Lenken wird durch den Fahrer durchgeführt und das elektronische Parkassistenzsystem informiert auf Grundlage einer von dem System bestimmten Parkbahn den Fahrer durch akustische und/oder optische und/oder haptisch wahrnehmbare Signale, welche Lenkaktionen er auszuführen hat.

Das Parkassistenzsystem 15 weist gemäß der vereinfachten Blockbilddarstellung in Fig. 3 ein erstes Modul 16 auf, mit dem eine interne Lenkkurve III (Fig. 2) berechnet wird. Diese interne Lenkkurve III wird abhängig von der Parkbahn 2' berechnet. Dazu wird ein funktioneller Zusammenhang dahingehend gebildet, dass an einem Krümmungssprung an einem Übergang 11' bis 14' eine effektive Krümmung anhand einer Funktion bestimmt wird, wobei die Funktion abhängig von den Krümmungswerten der benachbarten Bahnsegmente 6' bis 10' ist. So wird beispielsweise am Segmentübergang 11' dort ein effektiver Krümmungswert abhängig von den Krümmungswerten der Bahnsegmente 6' und 7' bestimmt und darüber hinaus diese Bestimmung auch abhängig von der Strecke S durchgeführt. Dies bedeutet insbesondere, dass die Bestimmung abhängig von der Strecke S dahingehend erfolgt, dass der Verlauf der internen Lenkkurve III abhängig von der Position des Fahrzeugs 1 auf der Parkbahn 2' und/oder abhängig von der Position des Krümmungssprungs bzw. des Übergangs 11' auf der Parkbahn 2' bestimmt wird. Aufgrund dieses funktionellen Zusammenhangs, bei dem auch die Krümmungswerte explizit berücksichtigt werden, welche den reziproken Wert des Radius der einzelnen Bahnsegmente 6' bis 10' darstellen, kann auch die interne Lenkkurve III als Funktion von dieser genannten Strecke S und den Krümmungen der beiden benachbarten Bahnsegmente 6' und 7' an einem spezifischen Krümmungssprung berechnet werden.

Im Ausführungsbeispiel ist vorgesehen, dass die Bahnsegmente 7' und 9' über ihre Längen jeweils einen konstanten Krümmungswert aufweisen.

In dem ersten Modul 16 wird darüber hinaus bei einem Auftreten eines Krümmungssprungs an einem Segmentübergang 11' bis 14' und somit bei einer Abweichung der Werte der Krümmungen von zu einem Übergang 11' bis 14' benachbarten Bahnsegmente 6' bis 10' um zumindest einen vorgebbaren Toleranzwert der Verlauf der internen Lenkkurve III geglättet. Dabei wird insbesondere die Parkbahn 2' am betrachteten Segmentübergang 11' bis 14' geglättet und abhängig davon die interne Lenkkurve III bestimmt. Besonders vorteilhaft ist es, wenn dieses Glätten durch eine Interpolation zwischen den jeweiligen Krümmungswerte definierenden Punkten der jeweiligen Bahnsegmente 6' bis 10' durchgeführt wird. Eine derartige Vorgehensweise und eine insbesondere streckenabhängige Interpolation linearer oder höherer Ordnung ermöglicht eine sehr einfache und aufwandsarme Bestimmung einer internen Lenkung III, die ruppige Lenkvorgänge vermeidet und erfordert keine aufwändige Berechnung von Klothoiden-Bahnen, so dass diesbezüglich keine kostenintensive Rechnereinheit im Parkassistenzsystem 15 erforderlich ist.

Gemäß der Darstellung in Fig. 2 ist insbesondere vorgesehen, dass die interne Lenkkurve III an einem mit einem Krümmungssprung ausgebildeten Übergang 11' bis 14' innerhalb einer bestimmten Streckenlänge von einem Ausgangswert einer Lenkanforderung auf einen Endwert der Lenkanforderung ansteigt. Das heißt, die Änderung der Lenkanforderung ist eine Funktion der Strecke. Gemäß der Darstellung in Fig. 2 ist dies beispielhaft am Segmentübergang 11' gezeigt. Bis zum Ausgangspunkt S1' ist die Lenkanforderung 0 und somit auch kein Lenkeinschlag an den Rädern 4 und 5 gegeben. Abhängig von der Parkbahn 2' wird dann ein Lenkeinschlag erforderlich und die Lenkanforderung wird ausgehend von dem Wert 0 auf einen Wert L1' innerhalb des Streckenintervalls S1' bis S2' erhöht, insbesondere kontinuierlich erhöht. Auch hier ist vorgesehen, dass aufgrund der Bewegung des Fahrzeugs 1 und der Systemträgheit die Lenkanforderung um ein Streckenintervall d' und somit auch mit einem gewissen zeitlichen Versatz vor dem Segmentübergang 11' beginnt und auch erst nachher wieder endet.

Beim Befahren der Parkbahn 2' weiß das Parkassistenzsystem 15 aufgrund von Informationen von Wegsensoren des Fahrzeugs 1 wo es sich entlang der Parkbahn 2' gerade befindet, da dies abhängig von der Parkbahn 2' und von Sensoreninformationen berechnet wird.

Abhängig von dieser internen Lenkkurve III wird dann in einem zweiten Modul 17 des Parkassistenzsystems 15 eine externe Lenkkurve IV bestimmt. Neben der Abhängigkeit von der internen Lenkkurve III werden bei der Bestimmung der externen Lenkkurve IV, welche dann die Lenkanforderungen an das Lenksystem 3 ausgibt, weitere Informationen berücksichtigt. In diesem Zusammenhang können Parameter wie eine einstellbare maximale Lenkgeschwindigkeit, ein einstellbarer maximaler Lenkgradient und Segmentierungsschritte der Parkbahn 2' berücksichtigt werden. Darüber hinaus können auch tatsächliche aktuelle Positionsinformationen des Fahrzeugs 1 entlang der Parkbahn 2' berücksichtigt werden. Es sei an dieser Stelle erwähnt, dass die Parkbahn 2' die theoretisch berechnete und vorgegebene ist, wobei beim Parkvorgang auch eine gewisse Abweichung von dieser Parkbahn 2' auftreten kann und auch erlaubt ist. Der Abstand d' kann kleiner 1 m sein und ist insbesondere auch abhängig von der jeweiligen Geschwindigkeit des Fahrzeugs 1 entlang der Parkbahn 2'. Entsprechend sind derartige Streckenversatze bzw. Abstände zwischen einem Beginn und einem Ende einer Änderung eines Lenkeinschlags und somit einer erforderlichen Lenkanforderung L in Bezug zur diskreten Position eines Segmentübergangs 11' bis 14' auch an den Segmentübergängen 12', 13' und 14' vorhanden, ohne dass diese in Fig. 2 näher gekennzeichnet wären. In zeitlicher Dimension bemessen ist dieser Versatz vorzugsweise kleiner 1,5 s, insbesondere 1 s.

Darüber hinaus ist vorgesehen, dass die externe Lenkkurve IV abhängig von der Geschwindigkeit des Fahrzeugs 1 während des Parkvorgangs bestimmt wird. Das heißt, auch dann, wenn das Fahrzeug 1 während dem Parkvorgang keine konstante Geschwindigkeit aufweist und beschleunigt oder bremst, wird dies bei der Lenkkurve berücksichtigt. Besonders bevorzugt ist es, dass das Durchführen von Lenkeinschlägen verhindert oder gestoppt oder unterbrochen wird, wenn das Fahrzeug 1 während des Parkvorgangs, und somit insbesondere während dem Durchführen eines autonomen Lenkeingriffs zum Stehen kommt. Im Stand des Fahrzeugs 1 werden daher keine weiteren autonomen Lenkeinschläge durchgeführt.

Insbesondere ist somit die interne Lenkkurve III nach deren Berechnung abhängig von der Parkbahn 2' dann für den spezifischen Parkvorgang fest vorgegeben und die externe Lenkkurve IV kann abhängig von spezifischen Situationen während des Parkvorgangs verändert werden.

Im Hinblick auf eine Möglichkeit der Änderung von Segmentierungsschritten kann auch vorgesehen sein, dass beispielsweise die Bahnsegmente 7' und 9', welche Bahnbögen darstellen, nicht jeweils durch einen einzigen Bahnbogen dargestellt werden, sondern segmentiert werden. Durch eine derartige Ausgestaltung kann dann eine feingliedrigere Parkbahn 2' ermöglicht werden, wobei dann gegebenenfalls auch vorgesehen wird, dass diese mehreren Bahnbögen unterschiedliche Krümmungswerte aufweisen können. Auch dadurch können zu große Krümmungssprünge an Segmentübergängen vermieden werden, wodurch bereits die für die Bestimmung der internen Lenkkurve III und somit auch der externen Lenkkurve IV grundlegende Information, nämlich die Parkbahn 2' im Hinblick auf unerwünscht große Krümmungssprünge, unkritischer ausgebildet werden kann.

## Patentansprüche

1. Verfahren zum Bestimmen einer Lenkkurve (III, IV) für Lenkeinschläge von lenkbaren Rädern (4, 5) eines Fahrzeugs (1) bei einem Parkvorgang des Fahrzeugs (1), bei welchem das Lenken der lenkbaren Räder (4, 5) durch einen autonomen Lenkeingriff in ein Lenksystem (3) des Fahrzeugs (1) durchgeführt wird und eine Parkbahn (2') aus Bahnsegmenten (6' bis 10') mit unterschiedlichen Krümmungswerten ausgebildet wird, wobei die Lenkkurve (III, IV) abhängig von der Parkbahn (2') bestimmt wird und bei einem Auftreten eines Krümmungssprungs an einem Übergang (11' bis 14') zwischen zwei Bahnsegmenten (6' bis 10') mit unterschiedlichen Krümmungswerten der Verlauf der Lenkkurve (III, IV) am Übergang (11' bis 14') abhängig von den Krümmungswerten bestimmt wird, wobei bei einer Abweichung der Werte der Krümmungen um zumindest einen vorgebbaren Toleranzwert die Parkbahn (2') am Übergang (11' bis 14') geglättet und abhängig davon die Lenkkurve (III, IV) bestimmt wird,
**dadurch gekennzeichnet, dass**
das Glätten durch eine streckenabhängige lineare Interpolation zwischen den die jeweiligen Krümmungswerte definierenden Punkten der jeweiligen Bahnsegmente (6' bis 10') durchgeführt wird.

2. Verfahren nach Anspruch 1,
**dadurch gekennzeichnet, dass**
bei einem Auftreten eines Krümmungssprungs an einem Übergang (11' bis 14') zwischen zwei Bahnsegmenten (6' bis 10') mit unterschiedlichen Krümmungswerten der Verlauf der Lenkkurve (III, IV) abhängig von der Position des Fahrzeugs (1) auf der Parkbahn (2') und/oder abhängig von der Position des Krümmungssprungs auf der Parkbahn (2') bestimmt wird.

3. Verfahren nach einem der vorhergehenden Ansprüche,
**dadurch gekennzeichnet, dass**
die Lenkkurve (III, IV) so berechnet wird, dass eine aufgrund der Parkbahn (2') erforderliche Änderung eines Lenkeinschlags, insbesondere aufgrund eines Krümmungssprungs an einem Übergang (11' bis 14') zwischen zwei Bahnsegmente (6' bis 10'), innerhalb eines Wegintervalls (S1', S2') von einem Ausgangswert (O) auf einen erforderlichen Endwert (L1') verändert, insbesondere kontinuierlich verändert wird.

4. Verfahren nach einem der vorhergehenden Ansprüche,
**dadurch gekennzeichnet, dass**
ein Bahnsegment (6' bis 10') über seine Länge einen konstanten Krümmungswert aufweist und dieser zur Bestimmung eines Krümmungssprungs berücksichtigt wird.

5. Verfahren nach einem der Ansprüche 1 bis 3,
**dadurch gekennzeichnet, dass**
ein Bahnsegment (6' bis 10') über seine Länge einen variierenden Krümmungswert aufweist und für die Beurteilung eines Krümmungssprungs zwischen zwei Bahnsegmenten (6' bis 10') der Krümmungswert eines Bahnsegments (6' bis 10') berücksichtigt wird, welcher direkt am Krümmungssprung auftritt.

6. Verfahren nach einem der vorhergehenden Ansprüche;
**dadurch gekennzeichnet, dass**
als Lenkkurve eine interne Lenkkurve (III) des Parkassistenzsystems (15) bestimmt wird und abhängig von dieser internen Lenkkurve (III) eine an das Lenksystem (3) des Fahrzeugs (1) ausgegebene externe Lenkkurve (IV) bestimmt wird.

7. Verfahren nach einem der vorhergehenden Ansprüche,
**dadurch gekennzeichnet, dass**
das Durchführen von autonomen Lenkeinschlägen verhindert oder zumindest unterbrochen wird, wenn das Fahrzeug (1) während des Parkvorgangs mit einer Geschwindigkeit kleiner eines Geschwindigkeitsschwellwerts bewegt wird, insbesondere zum Stehen kommt.

8. Verfahren nach einem der vorhergehenden Ansprüche,
**dadurch gekennzeichnet, dass**
eine Änderung der Geschwindigkeit des Fahrzeugs (1) während des Parkvorgangs erfasst und abhängig davon eine von der bestimmten Lenkkurve (III, IV), insbesondere einer externen Lenkkurve (IV), abhängige Lenkanforderung an das Lenksystem (3) geändert wird.

9. Verfahren nach einem der vorhergehenden Ansprüche,
**dadurch gekennzeichnet, dass**
für das Ausbilden der Parkbahn (2') und/oder dem Bestimmen der Lenkkurve (III,IV) Parameter vorgegeben werden.

10. Verfahren nach Anspruch 9,
**dadurch gekennzeichnet, dass**
für das Ausbilden der Parkbahn (2') eine Segmentierungsweise vorgegeben wird und/oder für das Bestimmen der Lenkkurve (III, IV) zumindest ein maximaler Lenkgradient und/oder eine Lenkgeschwindigkeit vorgegeben werden.

11. Parkassistenzsystem zum Bestimmen einer Lenkkurve (III, IV) mit Lenkeinschlägen von lenkbaren Rädern (4, 5) eines Fahrzeugs (1) bei einem Parkvorgang des Fahrzeugs (1), mit welchem das Lenken der lenkbaren Räder (4, 5) durch einen autonomen Lenkeingriff in ein Lenksystem (3) des Fahrzeugs (1) durchgeführt wird, wobei das Parkassistenzsystem (15) zumindest ein Modul (16, 17) aufweist, mittels welchem eine Parkbahn (2') aus Bahnsegmenten (6' bis 10') mit unterschiedlichen Krümmungswerten ausgebildet wird, und mittels welchem die Lenkkurve (III, IV) abhängig von der Parkbahn (2') bestimmt wird, wobei das Modul (16, 17) derart ausgebildet ist, dass bei einem Auftreten eines Krümmungssprungs an einem Übergang (11' bis 14') zwischen zwei Bahnsegmenten (6' bis 10') mit unterschiedlichen Krümmungswerten der Verlauf der Lenkkurve (III, IV) am Übergang (11' bis 14') abhängig von den Krümmungswerten bestimmt wird, wobei bei einer Abweichung der Werte der Krümmungen um zumindest einen vorgebbaren Toleranzwert die Parkbahn (2') am Segmentübergang (11' bis 14') geglättet und abhängig davon die Lenkkurve (III, IV) bestimmt wird
**dadurch gekennzeichnet, dass**
das Glätten durch eine streckenabhängige lineare Interpolation zwischen den die jeweiligen Krümmungswerten definierenden Punkten der jeweiligen Bahnsegmente (6' bis 10') durchgeführt wird.

12. Parkassistenzsystem nach Anspruch 11,
**dadurch gekennzeichnet, dass**
bei einem Auftreten eines Krümmungssprungs an einem Übergang (11' bis 14') zwischen zwei Bahnsegmenten (6' bis 10') mit unterschiedlichen Krümmungswerten der Verlauf der Lenkkurve (III, IV) abhängig von der Position des Fahrzeugs (1) auf der Parkbahn (2') und/oder abhängig von der Position des Krümmungssprungs auf Parkbahn (2') bestimmt wird.

## Claims

1. Method for determining a steering curve (III, IV) for steering angles of steerable wheels (4, 5) of a vehicle (1) during a parking process of the vehicle (1), in which the steering of the steerable wheels (4, 5) is carried out by an autonomous steering intervention into a steering system (3) of the vehicle (1), and a parking path (2') composed of path segments (6' to 10') with different curvature values is formed, wherein the steering curve (III, IV) is determined as a function of the parking path (2'), and when a jump in curvature occurs at a junction (11' to 14") between two path segments (6' to 10') with different curvature values, the profile of the steering curve (III, IV) is determined at the junction (11' to 14') as a function of the curvature values, wherein in the case of a deviation of the values of the curvatures by at least one predefinable tolerance value the parking path (2') at the junction (11' to 14') is smoothed, and the steering curve (III, IV) is determined as a function thereof,
**characterized in that**
the smoothing is carried out by a route-dependent linear interpolation between the points of the respective path segments (6' to 10') which define the respective curvature values.

2. Method according to Claim 1,
**characterized in that**
when a jump in curvature occurs at a junction (11' to 14') between two path segments (6' to 10') with different curvature values, the profile of the steering curve (III, IV) is determined as a function of the position of the vehicle (1) on the parking path (2') and/or as a function of the position of the jump in curvature on the parking path (2').

3. Method according to one of the preceding claims,
**characterized in that**
the steering curve (III, IV) is calculated in such a way that a change in the steering angle which is necessary due to the parking path (2'), in particular due to a jump in curvature at a junction (11' to 14') between two path segments (6' to 10'), is changed from an initial value (0) to a necessary final value (L1') within one travel interval (S1', S2'), in particular is changed continuously.

4. Method according to one of the preceding claims,
**characterized in that**
a path segment (6' to 10') has a constant curvature value over its length, and said curvature value is taken into account for the determination of a jump in curvature.

5. Method according to one of Claims 1 to 3,
**characterized in that**
a path segment (6' to 10') has a varying curvature value over its length, and in order to assess a jump in curvature between two path segments (6' to 10') the curvature value of a path segment (6' to 10') which occurs directly at the jump in curvature is taken into account.

6. Method according to one of the preceding claims,
**characterized in that**
an internal steering curve (III) of the parking assistance system (15) is determined as a steering curve, and an external steering curve (IV) which is output to the steering system (3) of the vehicle (1) is determined as a function of this internal steering curve (III).

7. Method according to one of the preceding claims,
**characterized in that**
the implementation of autonomous steering angles is prevented or at least interrupted if the vehicle (1) is moved at a speed lower than a speed threshold value, in particular comes to a standstill, during the parking process.

8. Method according to one of the preceding claims,
**characterized in that**
a change in the speed of the vehicle (1) during the parking process is sensed and as a function thereof a steering request to the steering system (3) is changed, said steering request being dependent on the specific steering curve (III, IV), in particular on an external steering curve (IV).

9. Method according to one of the preceding claims,
**characterized in that**
parameters are predefined for the formation of the parking path (2') and/or the determination of the steering curve (III, IV).

10. Method according to Claim 9,
**characterized in that**
for the formation of the parking path (2'), a segmentation method is predefined and/or for the determination of the steering curve (III, IV) at least a maximum steering gradient and/or a steering speed are/is predefined.

11. Parking assistance system for determining a steering curve (III, IV) with steering angles of steerable wheels (4, 5) of a vesicle (1) during a parking process of the vehicle (1), with which the steering of the steerable wheels (4, 5) is carried out by means of an autonomous steering intervention into a steering system (3) of the vehicle (1), wherein the parking assistance system (15) has at least one module (16, 17) by means of which a parking path (2' ) is formed from path segments (6' to 10') with different curvature values and by means of which the steering curve (III, IV) is determined as a function of the parking path (2'), wherein the module (16, 17) is embodied in such a way that when a jump in curvature occurs at a junction (11' to 14') between two path segments (6' to 10') with different curvature values, the profile of the steering curve (III, IV) at the junction (11' to 14') is determined as a function of the curvature values, wherein in the case of deviation of the values of the curvatures by at least one predefinable tolerance value the parking path (2') at the segment junction (11' to 14') is smoothed, and the steering curve (III, IV) is determined as a function thereof,
**characterized in that**
the smoothing is carried out by a route-dependent linear interpolation between the points, defining the respective curvature values, of the respective path segments (6' to 10').

12. Parking assistance system according to Claim 11,
**characterized in that**
when a jump in curvature occurs at a junction (11' to 14') between two path segments (6' to 10') with different curvature values, the profile of the steering curve (III, IV) is determined as a function of the position of the vehicle (1) on the parking path (2') and/or as a function of the position of the jump in curvature on the parking path (2').

## Revendications

1. Procédé pour déterminer une courbe de direction (III, IV) de braquage de direction de roues directrices (4, 5) d'un véhicule (1) au cours d'une opération de stationnement du véhicule (1), dans lequel la direction des roues directrices (4, 5) est effectuée par une intervention de direction autonome dans un système de direction (3) du véhicule (1) et une trajectoire de stationnement (2') constituée de segments de trajectoire (6' à 10') avec des valeurs de courbure différentes est réalisée, la courbe de direction (III, IV) étant déterminée en fonction de la trajectoire de stationnement (2') et dans le cas d'un saut de courbure au niveau d'une transition (11' à 14') entre deux segments de trajectoire (6' à 10') avec des valeurs de courbure différentes, l'allure de la courbe de direction (III, IV) est déterminée au niveau de la transition (11' à 14') en fonction des valeurs de courbure, où, dans le cas d'un écart des valeurs des courbures d'au moins une valeur de tolérance prédéfinissable, la trajectoire de stationnement (2') est lissée au niveau de la transition (11' à 14') et la courbe de direction (III, IV) est déterminée en fonction de celle-ci,
**caractérisé en ce que**
le lissage est effectué par une interpolation linéaire dépendant de la section entre les points des segments de trajectoire respectifs (6' à 10') définissant les valeurs de courbure respectives.

2. Procédé selon la revendication 1,
**caractérisé en ce que**
dans le cas d'un saut de courbure au niveau d'une transition (11' à 14') entre deux segments de trajectoire (6' à 10') avec des valeurs de courbure différentes, l'allure de la courbe de direction (III, IV) est déterminée en fonction de la position du véhicule (1) sur la trajectoire de stationnement (2') et/ou en fonction de la position du saut de courbure sur la trajectoire de stationnement (2').

3. Procédé selon l'une quelconque des revendications précédentes,
**caractérisé en ce que**
la courbure de direction (III, IV) est calculée de telle sorte qu'une variation du braquage de direction requise du fait de la trajectoire de stationnement (2'), en particulier du fait d'une saut de courbure au niveau d'une transition (11' à 14') entre deux segments de trajectoire (6' à 10'), à l'intérieur d'un intervalle de distance (S1', S2') soit modifiée d'une valeur de départ (0) à une valeur finale requise (L1'), en particulier en continu.

4. Procédé selon l'une quelconque des revendications précédentes,
**caractérisé en ce**
**qu'**un segment de trajectoire (6' à 10') présente sur sa longueur une valeur de courbure constante et celle-ci est prise en compte pour déterminer un saut de courbure.

5. Procédé selon l'une quelconque des revendications 1 à 3,
**caractérisé en ce**
**qu'**un segment de trajectoire (6' à 10') présente sur sa longueur une valeur de courbure variable et pour l'évaluation d'un saut de courbure entre deux segments de trajectoire (6' à 10'), on prend en compte la valeur de courbure d'un segment de trajectoire (6' à 10') qui se présente directement au niveau du saut de courbure.

6. Procédé selon l'une quelconque des revendications précédentes,
**caractérisé en ce que**
l'on détermine comme courbe de direction une courbe de direction interne (III) du système d'assistance au stationnement (15) et en fonction de cette courbe de direction interne (III) on détermine une courbe de direction externe (IV) transmise au système de direction (3) du véhicule (1).

7. Procédé selon l'une quelconque des revendications précédentes,
**caractérisé en ce que**
la mise en oeuvre de braquages de direction autonomes est empêchée ou au moins interrompue lorsque le véhicule (1) est déplacé pendant l'opération de stationnement à une vitesse qui est inférieure à une valeur de seuil de vitesse, en particulier s'il s'immobilise.

8. Procédé selon l'une quelconque des revendications précédentes,
**caractérisé en ce**
**qu'**une variation de la vitesse du véhicule (1) est détectée pendant l'opération de stationnement et en fonction de celle-ci, une demande de direction au système de direction (3), dépendant de la courbe de direction déterminée (III, IV), en particulier d'une courbe de direction externe (IV), étant modifiée.

9. Procédé selon l'une quelconque des revendications précédentes,
**caractérisé en ce que**
pour la réalisation de la trajectoire de stationnement (2') et/ou pour déterminer la courbe de direction (III, IV) , des paramètres sont prédéfinis.

10. Procédé selon la revendication 9,
**caractérisé en ce que**
pour la réalisation de la trajectoire de stationnement (2') un mode de segmentation est prédéfini et/ou pour déterminer la courbe de direction (III, IV) au moins un gradient de direction maximal et/ou une vitesse de direction sont prédéfinis.

11. Système d'assistance au stationnement pour déterminer une courbe de direction (III, IV) avec des braquages de direction de roues directrices (4, 5) d'un véhicule (1) dans le cas d'une opération de stationnement du véhicule (1), avec lequel la direction des roues directrices (4, 5) est réalisée au moyen d'une intervention de direction autonome dans un système de direction (3) du véhicule (1), le système d'assistance au stationnement (15) présentant au moins un module (16, 17) au moyen duquel est réalisée une trajectoire de stationnement (2') constituée de segments de trajectoire (6' à 10') avec des valeurs de courbures différentes, et au moyen duquel la courbe de direction (III, IV) est déterminée en fonction de la trajectoire de stationnement (2'), le module (16, 17) étant réalisé de telle sorte que dans le cas d'un saut de courbure au niveau d'une transition (11' à 14') entre deux segments de trajectoire (6' à 10') avec des valeurs de courbures différentes, l'allure de la courbe de direction (III, IV) au niveau de la transition (11' à 14') soit déterminée en fonction des valeurs de courbure, et dans le cas d'un écart des valeurs de courbures d'au moins une valeur de tolérance prédéfinissable, la trajectoire de stationnement (2') au niveau de la transition des segments (11' à 14') soit lissée et la courbe de direction (III, IV) soit déterminée en fonction de celle-ci,
**caractérisé en ce que**
le lissage est effectué par une interpolation linéaire dépendant de la section entre les points des segments de trajectoire respectifs (6' à 10') définissant les valeurs de courbure respectives.

12. Système d'assistance au stationnement selon la revendication 11,
**caractérisé en ce que**
dans le cas d'un saut de courbure au niveau d'une transition (11' à 14') entre deux segments de trajectoire (6' à 10') avec des valeurs de courbures différentes, l'allure de la courbe de direction (III, IV) est déterminée en fonction de la position du véhicule (1) sur la trajectoire de stationnement (2') et/ou en fonction de la position du saut de courbure sur la trajectoire de stationnement (2').
